Europäisches Patentamt

European Patent Office

Office européen des brevets

(11) Publication number: 0 347 897
A1

(12) **EUROPEAN PATENT APPLICATION**

(21) Application number: 89111354.0

(22) Date of filing: 22.06.89

(51) Int. Cl.⁴: **G06K 19/06 , G06K 19/08**

(30) Priority: 24.06.88 JP 157064/88
27.06.88 JP 158780/88

(43) Date of publication of application:
**27.12.89 Bulletin 89/52**

(84) Designated Contracting States:
**AT BE CH DE ES FR GB GR IT LI NL SE**

(71) Applicant: **OMRON TATEISI ELECTRONICS CO.**
**10, Tsuchido-cho Hanazono Ukyo-ku Kyoto 616(JP)**

(72) Inventor: **Kidera, Kinichi c/o Patent Center Omron Tateisi Electronics Co. 20, Igadera Shimokaiinji Nagaokakyo-shi Kyoto 617(JP)**

(74) Representative: **Kahler, Kurt, Dipl.-Ing. Patentanwälte Kahler & Käck Gerberstrasse 3 Postfach 1249 D-8948 Mindelheim(DE)**

(54) **Multifunction card.**

(57) A multifunction IC card comprises: a keyboard (19) to input data, commands or the like; a display (16) to display necessary information; contacts (14) to input and output signals; and an integrated circuit (15) for executing a predetermined process in response to an input signal from the keyboard or the contacts and for outputting the result to the outside through the display or the contacts. A sheet-shaped battery (thin film battery) (18) is arranged in the card at a position under the keyboard in a range of the width of the keyboard or longer. A solar battery (17) is further arranged on the card surface.

Alternatively, a card main body is constructed by a portion (11,12,13) in which the keyboard, display, contacts, integrated circuit and the like are enclosed and a resin base (27) joined to the portion. A magnetic stripe (28,29) is buried into the resin base. The surface of the magnetic stripe is flush with the resin base surface (card surface).

Fig. 1

# MULTIFUNCTION CARD

## BACKGROUND OF THE INVENTION

### Field of the Invention

The present invention relates to what is called an IC card having therein an integrated circuit (IC) and, more particularly, to a multifunction card which can accomplish many functions such as function as what is called a cash card which is used in an automated teller machine to withdraw or deposit the cash, function as a calculator, functions to input, output and store various kinds of information, functions as clock and calendar, and the like.

### Prior Art Statement

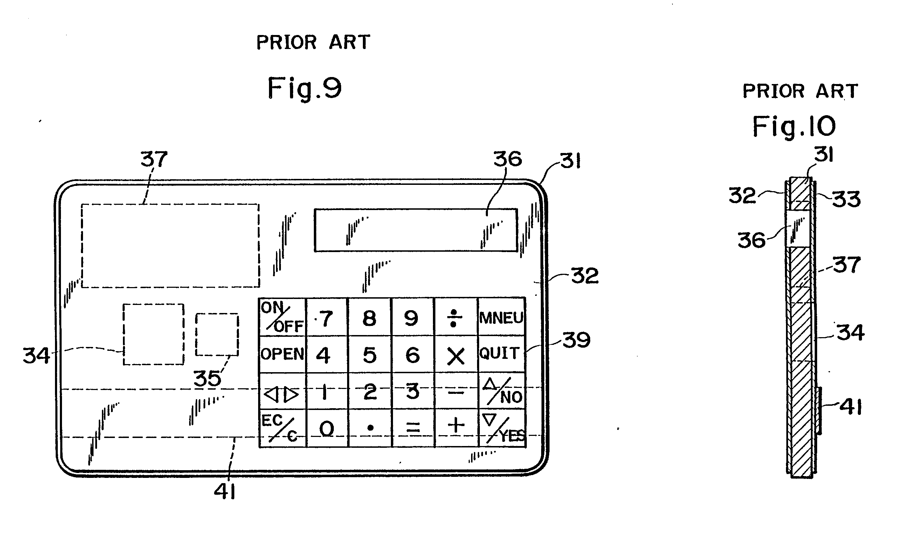

An example of a conventional multifunction IC card is shown in Figs. 9 and 10. A card main body of the IC card comprises a printed circuit board 31 and cover sheets 32 and 33 including stainless steel sheets which cover both of the front and back surfaces. The cover sheets 32 and 33 are adhered to the board 31. A contact portion 34, an integrated circuit (IC) chip 35, a liquid crystal display 36, and a battery 37 are enclosed in holes formed in the printed circuit board 31, respectively. The contact portion 34 has a number of contacts which are exposed to the outside from the hole of the cover sheet 33 of the back surface. On the other hand, the display surface of the display 36 is exposed to the front surface from the hole of the cover sheet 32 of the front (upper) surface. The IC card further has the keyboard 39 comprising key elements provided on the cover sheet 32 and a conductive pattern formed on the printed circuit board 31. A magnetic stripe 41 is adhered onto the cover sheet 33 of the back surface of the card. The contacts of the contact portion 34, IC chip 35, display 36, battery 37, keyboard 39, etc. are mutually connected by wiring patterns on the board 31.

However, such a kind of card generally has a drawback such that the life of the battery 37 is short. It is considered to prolong the life of the battery by providing a solar battery. However, it is difficult to arrange the solar battery because there is a limitation in its arrangement space due to the mutual positional relations among the electric component elements arranged in the card.

On the other hand, since the board 31 and the cover sheet 33 made of stainless steel are arranged just under the keyboard 39, the feeling of the key depression is hard and the key must be relatively strongly depressed, so that the operating performance is not always good.

Further, the magnetic stripe 41 adhered onto the back surface of the card is provided on the cover sheet 33 made of stainless steel. The magnetic stripe 41 is projected to the outside from the card surface and is in a state in which it is easily abraded. This results in causes to reduce the life of the card, to induce a disturbance of an output waveform which was magnetically read out, and to cause a reading error.

## SUMMARY OF THE INVENTION

It is an object of the present invention to prolong the life of a multifunction card by providing a solar battery on the surface of the card.

Another object of the invention is to improve the operating performance upon depression of keys.

Still another object of the invention is to provide a multifunction card in which the surface of a magnetic stripe can be flush with the surface of the card.

A multifunction card according to the present invention comprises: a keyboard which includes a plurality of key elements and in which the key elements are arranged on the surface of the card; a display whose display surface is arranged so as to be exposed to the card surface; a contact portion which includes a plurality of contacts and in which these contacts are arranged so as to be exposed to the card surface; an integrated circuit, included in the card, for accomplishing a plurality of functions on the basis of inputs from the keyboard or the contact portion and for outputting the results through the display or the contact portion; a first sheet-shaped battery arranged in the card at a back position of the keyboard in a range of a width of the keyboard or longer; and a second solar battery whose photo sensitive surface is arranged on the card surface at a position other than the keyboard and the display surface of the display. Preferably, the first sheet-shaped battery and the second solar battery are connected in parallel.

According to the invention, as mentioned above, since the solar battery is provided in addition to the internal battery, i.e., the first sheet-shaped battery, the life of the internal battery can be prolonged.

On the other hand, since the sheet-shaped battery is arranged under the keyboard, when a key of the keyboard is depressed, the sheet-shaped battery functions as a kind of cushion and a relatively soft depression feeling is obtained. Therefore, the input operation can be easily executed by a weak depressing force.

A multifunction card according to the invention comprises: a card main body which comprises a printed circuit board, a resin base joined therewith, and cover sheets covering both upper surfaces of the printed circuit board and in which the upper surfaces of the cover sheet and the upper surfaces of the resin base are flush with each other; a keyboard which includes a plurality of key elements and in which the key elements are arranged on the surface of the cover sheet; a display which is provided on the printed circuit board and whose display surface is arranged so as to be exposed to the cover sheet surface; a contact portion which includes a plurality of contacts and in which the contacts are arranged so as to be exposed to the cover sheet surface; an integrated circuit, provided on the printed circuit board, for accomplishing a plurality of functions on the basis of inputs from the keyboard or the contact portion and for outputting the results through the display or the contact portion; and a magnetic stripe which is buried into a resin base so that the surface thereof is flush with the resin base surface on at least one surface of the resin base and on which information regarding the card is magnetically recorded.

According to the invention, since the magnetic stripe is provided so that the surface thereof flushes with the card surface in the same level, the surface of the magnetic stripe is not unexpectedly abraded and the life can be certainly prolonged. Moreover, the magnetic reading output waveform is also stabilized, and the multifunction card having the high reliability is derived.

Further, since both of the front and back surfaces of the resin base can be used as spaces to arrange the magnetic stripes, the magnetic stripes of different kinds of formats can be also provided on both of the front and back surfaces of the card. The generality of the card is raised.

BRIEF DESCRIPTION OF THE DRAWINGS

Figs. 1 to 6 show the first embodiment of the present invention;
    Fig. 1 is a plan view of a multifunction card;
    Fig. 2 is a cross sectional view taken along the line II-II in Fig. 1;
    Fig. 3 is a cross sectional view taken along the line III-III in Fig. 1;

    Fig. 4 is a cross sectional view taken along the line IV-IV in Fig. 1;

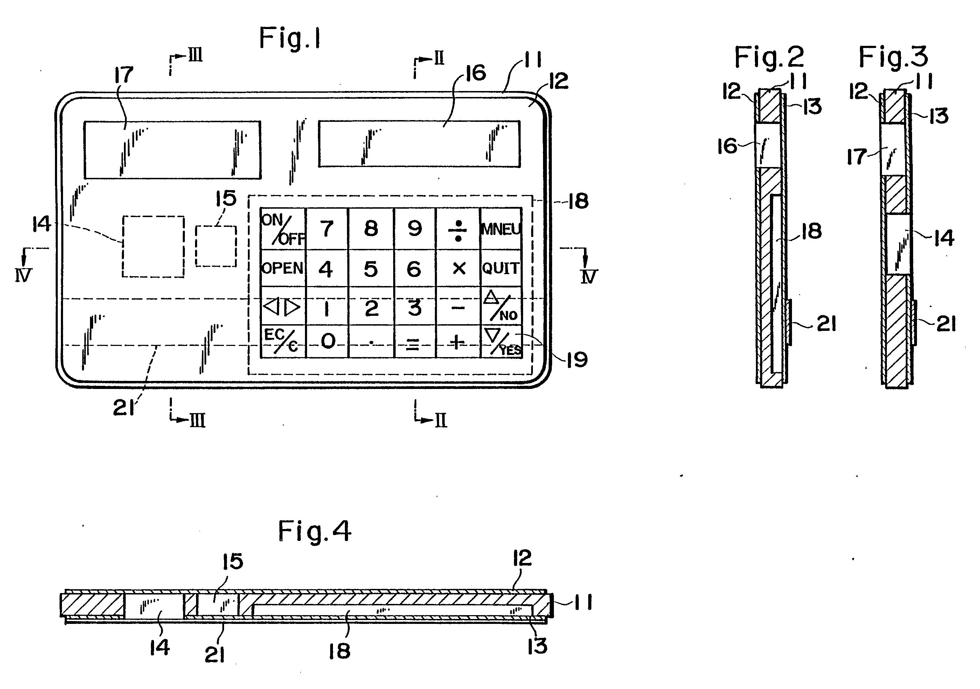

    The cross sectional views of Figs. 2 to 4 are exaggeratedly illustrated in the thickness direction;

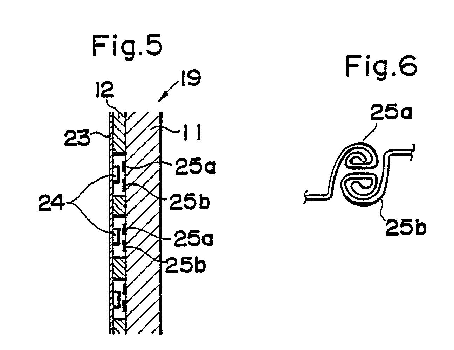

    Fig. 5 is an enlarged cross sectional view of a keyboard;
    Fig. 6 is an enlarged plan view showing contact patterns of the keyboard;

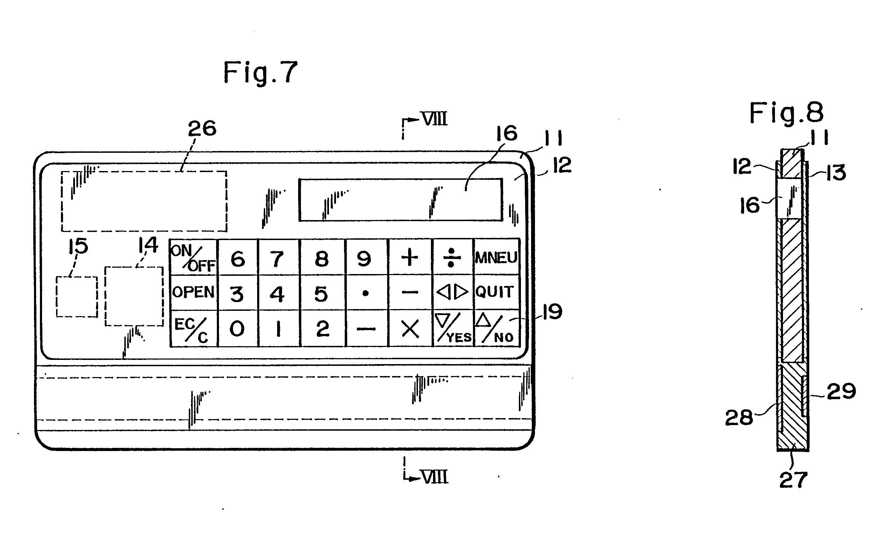

    Figs. 7 and 8 show the second embodiment of the invention;
    Fig. 7 is a plan view of a multifunction card;
    Fig. 8 is a cross sectional view taken along the line VIII-VIII in Fig. 7;

    Figs. 9 and 10 show a conventional example;
    Fig. 9 is a plan view of a multifunction card; and
    Fig. 10 is a cross sectional view of the card of Fig. 9.

DETAILED DESCRIPTION OF PREFERRED EMBODIMENTS

Figs. 1 to 6 show the first embodiment of the present invention.

In Figs. 1 to 4, an IC card main body comprises a printed circuit board 11 and cover sheets 12 and 13 which are adhered onto both of the front and back surfaces of the board. The cover sheets 12 and 13 include stainless steel sheets.

A plurality of holes are formed in the printed circuit board 11. A contact portion 14, an IC chip 15, a liquid crystal display 16, and a solar battery 17 are enclosed in those holes. In Fig. 1, the display 16 and the solar battery 17 are arranged in the upper right and left portions, respectively. A keyboard 19 is located below the display 16 in Fig. 1. The contact portion 14 and IC chip 15 are located below the solar battery 17 in Fig. 1. At the back surface of the keyboard 19, a concave portion is formed on the board 11 and a sheet-shaped battery (thin film battery) 18 is arranged in the concave portion.

The sheet-shaped battery 18 is provided in a range wider than the width of the keyboard 19. Since the sheet-shaped battery 18 is arranged on the back side of the keyboard 19, the solar battery 17 can be arranged at the position where the battery 37 is provided in the conventional card (see Fig. 9). A photo sensitive surface of the solar battery 17 is exposed to the outside through the hole of the cover sheet 12. The photo sensitive surface and the surface of the cover sheet 12 are flattened. As is well known, the solar battery 17 converts the energy of the light entering the photo sensitive surface into the electric energy and outputs. Preferably, the sheet-shaped battery 18 as an internal battery and the solar battery 17 are connected in parallel through a reverse current preventing element (diode or the like). Since the solar battery 17 assists the sheet-shaped battery 18 as mentioned above, the life of the battery 18 can be prolonged.

On the other hand, the sheet-shaped battery 18 is arranged behind the whole back surface of the keyboard 19 and the battery 18 can relatively softly accept the depressing force to a key of the keyboard 19, so that a relatively soft depression feeling can be obtained. Thus, the key input operation can be executed by a weak depressing force such that not so large force is required for the finger tip.

The contact portion 14 has a number of contacts. These contacts are exposed to the outside from the back surface of the card through the hole of the cover sheet 13.

The display surface of the liquid crystal display 16 is also exposed to the outside from the hole of the cover sheet 12. The display surface is flush with the surface of the cover sheet 12.

A structure of the keyboard 19 is shown in detail in Figs. 5 and 6. Holes are formed in the sheet cover 12 made of stainless steel at the positions corresponding to the keys. The upper surface of the cover 12 is covered by a film 23 made of a synthetic resin or rubber. Switch contacts 24 are attached to the inner surface of the film 23 at the positions of the holes of the cover 12. On the other hand, a pair of contact patterns 25a and 25b are formed on the printed circuit board 11 in correspondence to the switch contacts 24. When · the switch contacts 24 electrically connect the pair of contact patterns 25a and 25b by depressing the film 23, a key input signal is generated. As shown in the diagram, the keyboard 19 includes numerical keys and various kinds of function keys.

An IC of the IC chip 15 is connected to the above-mentioned contacts, display 16, batteries 17 and 18, keyboard 19 and the like by the wiring patterns on the board 11. The batteries 17 and 18 supply operating electric powers to those circuit elements. The IC has a transaction processing function, an arithmetic operating function, a clock function, and the like. The IC has a memory therein and the input data can be stored into the memory. The IC executes the designated process in response to the data or command which is input through the keyboard 19 or contacts. The result is displayed on the display 16 or is output through the contacts.

A magnetic stripe 21 is adhered onto the back surface of the card in the longitudinal direction.

Information regarding the card is magnetically recorded on the magnetic stripe 21. For instance, various kinds of data such as the number of transaction times, transaction information and the like which are necessary as a cash card which is used in an automated teller machine are magnetically recorded on the magnetic stripe.

· The multifunction card is used, for instance, in the following manner.

The card ordinarily operates as a clock and the time (and the date) is displayed on the display 16.

When a calculating mode is set by the function key of the keyboard 19 and both of the numerical value data and the kind of calculation are input, the designated calculation is executed. The data which is input through the keyboard 19 and the result of the calculation is displayed on the display 16.

If the card is inserted into the automated teller machine, the recorded data on the magnetic stripe 21 is first read out. On the other hand, the contacts of the contact portion 14 come into contact with the contacts of a contact mechanism in a card reader/writer in the machine and the IC in the IC chip 15 and a controller in the machine are connected so that they can communicate. The input and output of the transaction data are executed through the contacts.

Figs. 7 and 8 show the second embodiment. In the diagrams, the same parts and components as those shown in Figs. 1 to 6 are designated by the same reference numerals.

In the embodiment, the card main body includes the printed circuit board 11 and a base 27 made of a synthetic resin. A groove is formed on the resin base 27. The board 11 is fitted and adhered into the groove, so that they are joined. The cover sheets 12 and 13 are adhered to both surfaces of the board 11. The surfaces of the cover sheets 12 and 13 and the surfaces of the resin base 27 are flush with each other.

Since the width of the board 11 is narrower than that in the first embodiment, the keyboard 19 is also formed long and narrowly. Although the keys of the keyboard 19 are arranged in a matrix form of four rows and six columns in the first embodiment, the keys are arranged in a matrix form of three rows and eight columns in the second embodiment. No sheet-shaped battery is provided in the card and an ordinary internal battery 26 is arranged at the position corresponding to the solar battery in the first embodiment.

Grooves are formed on both surfaces of the resin base 27 in the longitudinal direction. Magnetic stripes 28 and 29 are adhered to the grooves. The surfaces of the magnetic stripes 28 and 29 and the surfaces of the card are flush with each other. As in the ISO format or JIS-II format, different types of formats can be used for the magnetic stripes 28 and 29, so that the generality of the card is high. Since the magnetic stripes 28 and 29 are attached such that their surfaces are flattened with the surface of the card like a flush surface, the surfaces of the magnetic stripes 28 and 29 are not unexpectedly abraded and the life of the card can be certainly prolonged. Moreover, the magnetically read output waveform also becomes stable and the multifunction card of the high reliability is obtained.

## Claims

1. A multifunction card comprising:
a keyboard (19) including a plurality of key elements (24, 25a, 25b) which are arranged on a surface of the card;
a display (16) whose display surface is arranged so as to be exposed to the card surface;
a contact portion (14) including a plurality of contacts which are arranged so as to be exposed to the card surface;
an integrated circuit (15), provided in the card, for accomplishing a plurality of functions on the basis of inputs from said keyboard or said contact portion and for outputting the results of the functions executed through said display or said contact portion;
a first sheet-shaped battery (18) arranged in the card at a position behind the keyboard in a range of a width of the keyboard or longer; and
a second solar battery (17) whose photo sensitive surface is arranged on the card surface at a location other than the positions corresponding to the keyboard and the display surface of the display.

2. A card according to claim 1, wherein said first sheet-shaped battery and said second solar battery are connected in parallel.

3. A card according to claim 1 or 2, further comprising a magnetic stripe (21,28,29), onto which information relating to the card is magnetically recorded.

4. A card according to claim 3, wherein said magnetic stripe (28,29) is buried into the resin base so as to be flush with the resin base surface.

5. A multifunction card comprising:
a card main body comprising a printed circuit board (11), a resin base (27) jointed thereto, and cover sheets (12,13) covering both surfaces of the printed circuit board, surfaces of the cover sheets and surfaces of the resin base being flush with each other;
a keyboard (19) including a plurality of key elements which are arranged on the surface of the cover sheet;
a display (16) which is provided on the printed circuit board and whose display surface is arranged so as to be exposed to the cover sheet surface;

a contact portion (14) including a plurality of contacts which are arranged so as to be exposed to the cover sheet surface;
an integrated circuit (15), provided on the printed circuit board, for accomplishing a plurality of functions on the basis of inputs from said keyboard or said contact portion and for outputting the results of said functions executed through said display or said contact portion; and
a magnetic stripe (28,29), onto which information relating to the card is magnetically recorded, buried into the resin base so as to be flush with the resin base surface.

6. A card according to any of the preceding claims, wherein at least two magnetic stripes of different formats are arranged on opposite surfaces of the resin base.

7. A card according to any of the preceding claims, wherein said cover sheets (12,13) are thin plates made of stainless steel.

19040 EP Patentanwälte Kahler & Käck 21. Juni 1989

EP 0 347 897 A1

## Fig.1

## Fig.2

## Fig.3

## Fig.4

# Fig.5

# Fig.6

19040 EP Patentanwälte Kahler & Käck 21. Juni 1989

EP 0 347 897 A1

## Fig.7

## Fig.8

PRIOR ART

Fig.10

PRIOR ART

Fig.9

| ON/OFF | 7 | 8 | 9 | ÷ | MNEU |
| OPEN | 4 | 5 | 6 | × | QUIT |
| ◁▷ | 1 | 2 | 3 | − | △/NO |
| EC/C | 0 | • | = | + | ▽/YES |

19040 EP Patentanwälte Kahler & Käck 21. Juni 1989

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| X | EP-A-167044 (CASIO COMPUTER COMP.) * page 15, line 36 - page 16, line 17 * | 1-2, 7 | G06K19/06 G06K19/08 |
| Y | * page 27, line 12 - page 34, line 22; figures 8, 11, 14, 22-26 * --- | 3-5 | |
| X | EP-A-203683 (VISA INTERNATIONAL SERVICE ASSOCIATION) * column 5, line 15 - column 10, line 55; figures 1-2 * | 1 | |
| A | --- | 5 | |
| Y | EP-A-247623 (OMRON TATEISI ELECTRONICS CO.) * column 4, line 53 - column 5, line 40; figures 1-2 * --- | 3-5 | |
| A | EP-A-197535 (SIEMENS AKTIENGESELLSCHAFT) * column 3, lines 1 - 53; figures 1-2 * --- | 1-5 | |
| A | EP-A-147337 (CII HONEYWELL BULL) * abstract; figure 1 * ----- | 1-6 | |

TECHNICAL FIELDS SEARCHED (Int. Cl.4 )

G06K
G07F

The present search report has been drawn up for all claims

| Place of search | Date of completion of the search | Examiner |
|---|---|---|
| THE HAGUE | 15 SEPTEMBER 1989 | GYSEN L.A.D. |